# EUROPÄISCHE PATENTSCHRIFT

(11) **EP 4 188 845 B1**
(45) Veröffentlichungstag und Bekanntmachung des Hinweises auf die Patenterteilung: **17.09.2025**
(21) Anmeldenummer: 21749803.9
(22) Anmeldetag: 26.07.2021
(51) Int. Cl.: B65G 15/18, B65G 15/16

(54) **DECKBANDFÖRDERER**
COVER BELT CONVEYOR
TRANSPORTEUR À COURROIE DE RECOUVREMENT

(30) Priorität: 27.07.2020 DE 102020209432
(43) Veröffentlichungstag der Anmeldung: 07.06.2023
(73) Patentinhaber: Technische Universität Bergakademie Freiberg, 09599 Freiberg (DE)
(72) Erfinder: LIEBERWIRTH, Holger, 04103 Leipzig (DE); ZINKE, Thomas, 09627 Bobritzsch-Hilbersdorf (DE)
(74) Vertreter: Pfenning, Meinig & Partner mbB
(86) Internationale Anmeldenummer: PCT/EP2021/070843
(87) Internationale Veröffentlichungsnummer: WO 2022/023257

(56) Entgegenhaltungen:
- EP-A2- 2 210 829
- DE-A1- 2 614 109
- JP-A- H02 138 007
- JP-A- H09 175 616
- JP-A- S6 443 407
- JP-A- S62 153 008

## Beschreibung

Die Erfindung betrifft Deckbandförderer (optionale Bezeichnung Doppelgurtförderer) mit deren Hilfe Güter, insbesondere Schüttgüter senkrecht oder in steiler Neigung über große Förderhöhen gefördert werden können. Dabei sollen unter steile Neigungen solche von mindestens 40 Grad gegenüber der Horizontalen verstanden werden.

Entsprechender Bedarf besteht in vielen Industriebereichen, unter anderem im Bergbau oder im Tunnelbau. Bestehende Fördereinrichtungen zur senkrechten oder steilen Förderung von Gütern sind in ihrer Förderhöhe und dem erreichbaren Durchsatz durch die mit dem jeweiligen Zugträger maximal übertragbaren Kräfte limitiert. So erreichen Gurtbecherwerke derzeit Höhen von max. ca. 200 m, Wellkantengurtsysteme max. ca. 400 m, im oberen Förderhöhenbereich allerdings jeweils nur noch bei geringen Durchsätzen. Die bezeichneten Anlagen weisen darüber hinaus gewisse Einschränkungen beim Transport klebriger Fördergüter, bei der Reinigung sowie hinsichtlich der Gleichmäßigkeit des Förderstroms auf. Gurtförderer, die diese Nachteile nicht aufweisen, können üblicherweise nur vergleichsweise geringe Steigungen überwinden. Deckbandförderer, bei welchen das Fördergut zwischen zwei parallel laufenden, jeweils über Kopftrommeln angetriebene Fördergurte eingeklemmt wird, die oben genannten Nachteile ebenfalls nicht aufweisen, sind in ihrer derzeitigen Gestaltung durch die max. zulässigen Gurtzüge ebenfalls in ihrer erreichbaren Höhe limitiert.

Bisher wurde Material entweder über die oben beschriebenen Fördereinrichtungen geringerer Höhe mit entsprechenden Zwischenübergaben von einem Förderer zum nächsten, über Muldengurtförderer mit entsprechend geringen Neigungen und daraus resultierend langen Förderwegen, häufig auch über diskontinuierliche Fördereinrichtungen, z.B. Lkw, Zug, Aufzugssysteme (Skip) oder ähnliche Einrichtungen oder gelegentlich, sehr energieintensiv auch mittels pneumatischer Fördereinrichtungen gefördert.

Die bekannten technischen Lösungen zur steilen oder senkrechten Förderung sind entweder bei der jeweils überwindbaren Förderhöhe oder den zu realisierbaren Durchsatzleistungen eingeschränkt. Sie sind aufgrund der Be- und Entladeprozesse in der Regel nur für eine Aufwärtsförderung, nicht jedoch zu einer Abwärtsförderung geeignet. Darüber hinaus sind sie bis auf Gurt- oder Deckgurtförderer schwierig zu reinigen, was insbesondere bei klebrigen Fördergütern nachteilig ist. Gurtförderer können nur geringe Neigungen überwinden und erfordern somit lange Transportwege, was durch den entsprechend erforderlichen Tunnelbau bei untertägigen Systemen sehr kostspielig ist. Deckbandförderer erreichen bisher aufgrund der ausschließlichen Anordnung der Antriebstrommel am oberen Umlenkpunkt der Zugmittel, die systembedingt wegen der höheren Bewegungswiderstände und eng tolerierten Quersteifigkeit der Fördergurte nur geringe Förderhöhen. Ihr Vorteil einer besonders guten Eignung für klebrige Güter kommt bei Notwendigkeit von Übergaben im Gesamtsystem nicht mehr zum Tragen, da Übergaben für klebrige Güter häufig eher aufwändig zu gestalten und in der Regel wartungsaufwändig sind. Zwischenantriebe wurden zwar für verschiedene Förderer bereits genannt, u.a. in DE 41 10 133 C2 für Taschengurt- und in DE 36 41 964 A1 für Deckbandförderer. Die vorgeschlagenen Lösungen für Deckgurtförderer sind aber aufgrund hoher Investitionskosten und der geringen Effektivität nicht praktikabel einsetzbar.

Das Potential der Zwischenantriebe für Deckbandförderer und Gurtförderer (Muldengurtförderer) ist technisch unterschiedlich zu diskutieren. Bei Gurtförderern ist die übertragbare Leistung durch Zwischenantriebe in der Regel beladungsabhängig, häufig unmittelbar durch die materialbedingte Auflast, immer aber auch mittelbar durch die resultierenden Gurtzüge beeinflusst. Diese Lastabhängigkeit schränkt die Anwendbarkeit von Zwischenantrieben bei Gurtförderern stark ein, so dass die Anzahl bekannter Anwendungsfälle überschaubar ist. Hingegen ist die Situation beim Deckbandförderer bei geeigneter konstruktiver Gestaltung eine völlig andere.

So ist aus DE 26 14 109 A1, welche die Merkmale des Oberbegriffs des Anspruchs 1 offenbart, eine Handhabungsvorrichtung zum Transport von Schüttgütern bekannt.

Es ist daher Aufgabe der Erfindung, Möglichkeiten für einen Einsatz von Deckbandförderern anzugeben, mit denen deutlich größere Förderhöhen als bisher überwunden werden können, ohne dass mehrere Systeme erforderlich sind und um deren Vorteile, nämlich eine kontinuierliche Förderung auch klebrigen Materials, bei guter Abreinigungsmöglichkeit, sowie eine Auf- und Abwärtsförderung insbesondere im Bergbau oder Tunnelbau zu ermöglichen.

Erfindungsgemäß wird diese Aufgabe mit einem Deckgurtförderer, der die Merkmale des Anspruchs 1 aufweist, gelöst. Vorteilhafte Ausgestaltungen und Weiterbildungen der Erfindung können mit in abhängigen Ansprüchen bezeichneten Merkmalen realisiert werden.

Ein erfindungsgemäßer Deckbandförderer ist mit jeweils einem als Endlosband ausgebildeten Traggurt und einem Deckgurt, die um jeweils eine Umlenktrommel und sowie jeweils eine drehbar gelagerte Antriebstrommel so geführt sind, dass sie in einem steilen oder senkrechten Förderbereich gegenüberliegend zueinander so geführt sind, dass ein Fördergut zwischen Traggurt und Deckgurt mit einer translatorischen Bewegung von Traggurt und Deckgurt in Richtung der Antriebstrommel oder in entgegengesetzter Richtung förderbar ist, analog zu herkömmlichen Deckbandfördern ausgebildet. Traggurt und Deckgurt können gleichartig aufgebaut sein und, insbesondere im senkrechten oder steilen Bereich des Deckbandförderers ein- oder mehrmalig ihre Funktion tauschen.

Im steilen oder senkrechten Förderbereich liegen Seitenrollen als walzenförmige Elemente paarweise an sich gegenüberliegenden Seiten jeweils an der nach außen weisenden Oberfläche des Traggurts und des Deckgurts druckkraftbeaufschlagt an.

Es können auch Mittenrollen als weitere walzenförmige Elemente vorhanden sein, die paarweise an sich gegenüberliegend Seiten jeweils an nach außen weisenden Oberflächen von Trag- und Deckgurt zwischen Seitenrollen angeordnet sind, vorhanden sein. Eine Mittenrolle fungiert bei einem Deckbandförderer hierbei als Andruckrolle um das Walken des Förderguts zu reduzieren und die Materialsäule bei Anlagenstopp zu halten. Die Seitenrollen als Dichtrollen, die mit walzenförmigen Elementen gebildet sind, können die Schließfunktion an den Kanten des Trag- und Deckgurtes übernehmen, um seitlichen Materialaustritt zu vermeiden.

An mindestens einem der walzenförmigen Elemente eines Paares von Seitenrollen greift ein Rotationsantrieb an, mit dem Traktionskräfte in Förderrichtung oder in die dazu entgegengesetzte Richtung auf den Traggurt und/oder Deckgurt übertragbar sind. Die walzenförmigen Elemente sind rechtwinklig zur Förderrichtung drehbar gelagert.

Bevorzugt sind jeweils ein Paar walzenförmiger Elemente an einem nach außen weisenden seitlichen Rand von Traggurt und Deckgurt in einer gemeinsamen Ebene rechtwinklig zur Förderrichtung angeordnet. Dadurch kann ein klemmender Halt erreicht werden. Außerdem kann in einem Zwischenraum in der Mitte, in dem keine dieser walzenförmigen Elemente angeordnet sind,

Fördergut gefördert werden, da sich in diesem Bereich Traggurt und Deckgurt nicht zwingend berühren und Fördergut dort in einem Spalt eingeschlossen sein kann.

Vorteilhaft sollte an den walzenförmigen Elementen jeweils eine Anpresseinrichtung angreifen, die zur Ausübung von Druckkräften auf die jeweils äußere Oberfläche von Traggurt und Deckgurt ausgebildet ist. Eine solche Anpresseinrichtung kann bevorzugt pneumatisch oder hydraulisch betrieben sein, was sich insbesondere vorteilhaft auf eine Regelbarkeit auswirken kann, auf die nachfolgend noch zurück zu kommen sein wird. Dabei kann mindestens ein in einem Kolben geführter Zylinder oder ein mit einem Fluid befüllbarer Hohlkörper aus elastisch verformbaren Material Druckkräfte in Richtung der äußeren Oberfläche eines Traggurtes bzw. eines Deckgurtes ausüben, mit denen die jeweiligen walzenförmigen und/oder die weiteren walzenförmigen Elemente in Richtung dieser Oberflächen gedrückt werden, so dass ggf. eine Kraft- bzw. Drehmomentübertragung von einem jeweiligen drehbar angetriebenen walzenförmigen Element auf Trag- bzw. Deckgurt in Förderrichtung oder entgegengesetzt dazu erreicht werden kann.

Außerdem ist eine elektronische Regeleinrichtung vorhanden und ausgebildet, um die Drehzahl und das Drehmoment, das mit angetriebenen walzenförmigen Elementen auf Traggurt und/oder Deckgurt übertragbar ist, in Abhängigkeit mindestens einer der mit der Sensoreinrichtung erfassten Messgrößen und der Antriebsleistung sowie der Drehzahl der Zugrolle, mit der der Traggurt bzw. Deckgurt angetrieben ist, zu regeln. Dadurch kann eine effektive Drehmomentenübertragung von drehbar angetriebenen walzenförmigen Elementen auf den jeweiligen Trag- bzw. Deckgurt erreicht werden, was sich vorteilhaft auf die in den Fördergurten wirkenden Gurtzüge und insbesondere eine mögliche Verlängerung eines steilen bzw. senkrechten Förderbereichs auswirkt. Insbesondere kann so die Belastung, insbesondere auf einen Traggurt bzw. die Antriebstrommel reduziert werden.

Die elektronische Regeleinrichtung kann ferner ausgebildet sein, die auf die jeweilige Oberfläche des Traggurtes oder Deckgurtes wirkende Druckkraft der einzelnen walzenförmigen Elemente in Abhängigkeit mindestens einer der mit der Einrichtung erfassten Messgrößen zu regeln.

Zwischen zwei Paaren, die jeweils in einer gemeinsamen Ebene angeordnet sind, kann zusätzlich jeweils mindestens ein Paar weiterer walzenförmiger Elemente (Mittenrollen) angeordnet sein. Dabei sollten die weiteren walzenförmigen Elemente rechtwinklig zur Förderrichtung drehbar gelagert und so angeordnet sein, dass ein weiteres walzenförmiges Element druckkraftbeaufschlagt mit der Oberfläche des Traggurtes und das jeweils andere weitere walzenförmige Element dieses Paares mit der Oberfläche des Deckgurtes in berührendem Kontakt steht. Die äußeren Oberflächen der weiteren walzenförmigen Elemente eines Paares weisen dabei einen größeren Abstand zueinander auf, als die äußeren Oberflächen der walzenförmigen Elemente (Seitenrollen) der Paare, zwischen den ein paar weiterer walzenförmiger Elemente angeordnet ist. Dieser Abstand wird im Wesentlichen vom Volumen des Förderguts, das in diesem Bereich zwischen Trag- und Deckgurt während der Förderung vorhanden ist, bestimmt.

Zusätzlich kann in einem Aufgabebereich für Fördergut eine weitere Sensoreinrichtung, die zur Bestimmung der Masse der momentan aufgegebenen Fördergutmenge ausgebildet ist, angeordnet und mit der elektronischen Regeleinheit verbunden sein, so dass die Drehzahl und das Drehmoment der walzenförmigen Elemente und/oder die mit einem jeweiligen walzenförmigen Element oder weiteren walzenförmigen Elementen auf die Oberfläche von Traggurt und Deckgurt ausgeübte Druckkraft unter Berücksichtigung dieser Masse regelbar ist. In einem Aufgabebereich sind Trag- und Deckgurt so zueinander insbesondere mittels der Umlenktrommel positioniert, dass Fördergut bevorzugt auf den Traggurt aufgegeben und dann in Förderrichtung soweit weiter bewegt wird, bis es vom Deckgurt abgedeckt ist und dann mit Trag- und Deckgurt in den steilen oder senkrechten Förderbereich weiter gefördert wird.

Mit der Erfindung ist eine Implementierung von Sensorik und Aktorik zur Steigerung der Maschinenintelligenz erreichbar.

Ein wesentlich neuer Aspekt ist die Nutzung von Zwischenantrieben bei Deckbandförderern, durch die prinzipiell beliebige Förderhöhen erreicht werden können und die Durchsatzleistungen im Wesentlichen durch die max. verfügbaren Abmessungen der Fördergurte begrenzt ist. Zwischenantriebe mittels angetriebener Tragrollen sind zwar von anderen Fördererarten, z.B. Gurtförderern prinzipiell bekannt. Während diese bei Gurtförderern jedoch insbesondere aufgrund der Beladungs- und Reibungsabhängigkeit der übertragbaren Leistung kaum zum Einsatz kommen, ist die Situation beim Deckbandförderer eine völlig andere. Hierbei wird die "Auflast" einer jeden Antriebsrolle im Wesentlichen nur durch die jeweils von der gegenüberliegenden Seite drückenden Rolle bestimmt und ist damit im Gegensatz zum Muldengurtförderer von der Beladung zunächst weitgehend unabhängig.

Mit der Implementierung zusätzlicher Antriebsrollen, wie dies die walzenförmigen Elemente sind, in einem online Mess- und Regelsystem kann auf eine Anpressdruckanpassung zur sicheren Übertragung der Antriebsleistung abgezielt werden. Im Sinne einer bedarfsgerechten Beanspruchung der Komponenten (Gurt und Rolle inklusive Halterung/Anpresssystem) kann man für die Antriebselemente im jeweiligen Gurtabschnitt die erforderliche Antriebsleistung auf den Zugträger im Betrieb bestimmen und dann auch bereitstellen, wobei der Anpressdruck ebenso abschnittsweise angepasst wird. Eine Drehmomenten- und Drehzahlregelung können damit einhergehen.

Es ist eine Reduzierung des Gurtzugs in beiden Fördergurten eines Deckbandförderers möglich. Theoretisch lassen sich beliebige Förderhöhen realisieren. Bei der Nutzung können die Vorteile von Deckbandförderern (wie z.B. ein kontinuierlicher Förderstrom, gute Abreinigbarkeit etc.) für wesentliche größere Förderhöhen als bisher ausgenutzt werden.

Bei den seitlich am Rand jeweils paarweise angeordneten Tragrollen, die bisher vor allem zum dichten Aufeinanderpressen der beiden Gurtränder genutzt werden, wird die Normalkraft ("Auflast") einer jeden Tragrolle im Wesentlichen nur durch die jeweils von der gegenüberliegenden Seite drückende Rolle bestimmt und ist damit im Gegensatz zum Muldengurtförderer von der Beladung weitgehend unabhängig. Bei der Erfindung werden diese Tragrollen nun auch als angetriebene walzenförmige Elemente genutzt, , so ist vorteilhaft eine von der Beladung weitgehend unabhängige Einleitung von Antriebsenergie in das Fördersystem möglich.

Nachfolgend soll die Erfindung beispielhaft näher erläutert werden.

Dabei zeigen:
- Figur 1: in schematischer Form ein Beispiel eines erfindungsgemäßen Deckbandförderers mit walzenförmigen Elementen;
- Figur 2: eine Schnittdarstellung einer Seitenansicht eines Beispiels und
- Figur 3: in schematischer Form eine Schnittdarstellung durch eine Aufsicht.

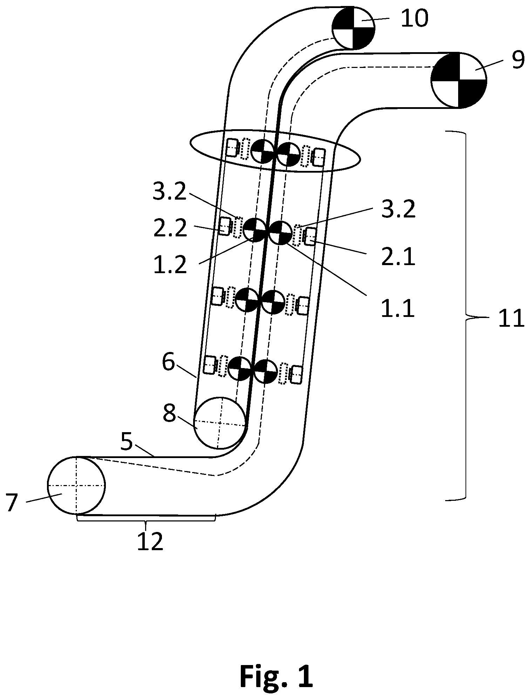

In Figur 1 ist schematisch ein Beispiel eines Deckbandförderers gezeigt. Dabei sind ein Traggurt 5 als Endlosband über eine am Beginn eines Aufgabebereichs 12 angeordnete Umlenktrommel 7 und ein Deckgurt 6 dort über die Umlenktrommel 8 geführt. Dabei werden Traggurt 5 und Deckgurt 6 an der Umlenktrommel 8 so zusammengeführt, dass sie in einem steilen oder senkrechten Förderbereich 11 parallel zueinander ausgerichtet und in Förderrichtung bewegt werden. Dazu ist der Traggurt 5 über die drehbar angetriebene Antriebstrommel 9 und der Deckgurt 6 ist über die hier ebenfalls drehbar angetriebene Antriebstrommel 10 geführt. Zumindest im Förderbereich 11 schließen Traggurt 5 und Deckgurt 6 das im Aufgabebereich 11 aufgegebene Fördergut (nicht dargestellt) zwischen sich ein.

Im Förderbereich 11 sind bei diesem Beispiel 8 Stück (4 Paare) drehbar gelagerter und mit einem Rotationsantrieb angetriebene walzenförmige Elemente 1.1 und 1.2 so angeordnet, dass ihre äußere Oberfläche in Richtung einer nach außen weisenden Oberfläche des Traggurtes 5 bzw. Deckgurtes 6 weisen.

An den walzenförmigen Elementen 1.1 und 1.2 ist jeweils eine Anpresseinrichtung 2.1 und 2.2 vorhanden, mit der die walzenförmigen Elemente 1.1 und 1.2 in Richtung der nach außen weisenden Oberfläche des entsprechenden Traggurtes 5 oder Deckgurtes 6 bewegbar sind, so dass sie mit Druckkraftbeaufschlagung gegen den jeweiligen Traggurt 5 oder den Deckgurt 6 gedrückt werden.

An den jeweiligen Anpresseinrichtungen 2.1 und 2.2 und/oder den walzenförmigen Elementen 1.1 und 1.2 ist jeweils eine Sensoreinrichtung 3.1 und 3.2 vorhanden, mit der mindestens eine Messgröße bestimmt werden kann, die zumindest das jeweils übertragbare bzw. zu übertragende Drehmoment mitbestimmen und die tatsächliche Drehzahl eines walzenförmigen Elements 1.1 und 1.2 messen kann.

Die erfasste(n) Messgröße(n) werden zu einer ebenfalls nicht dargestellten elektronischen Regeleinrichtung übermittelt, mit der das jeweils vom walzenförmigen Element 1.1 bzw. 1.2 übertragene Drehmoment und/oder dessen Drehzahl geregelt werden können, so dass eine optimale Antriebswirkung auf Traggurt 5 und Deckgurt 6 erreichbar ist.

Mit den Sensoreinrichtungen 3.1 und 3.2 kann mindestens eine der im allgemeinen Teil der Beschreibung erläuterten Messgröße erfasst und dann bei der Regelung berücksichtigt werden.

An Sensoreinrichtungen 3.1 und 3.2 kann mindestens ein Sensor vorhanden sein, der mindestens einen Messwert am jeweiligen walzenförmigen Element 1.1 bzw. 1.2, der jeweiligen Anpresseinrichtung 2.1 und 2.2 und/oder an der Oberfläche des Traggurtes 5 bzw. des Deckgurtes 6 bestimmen kann.

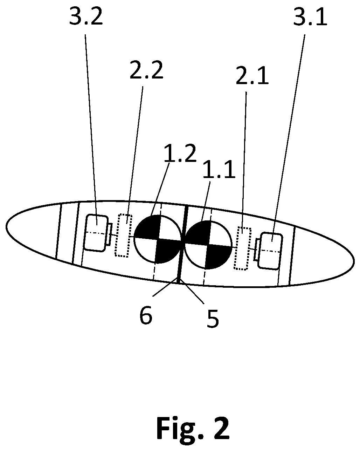

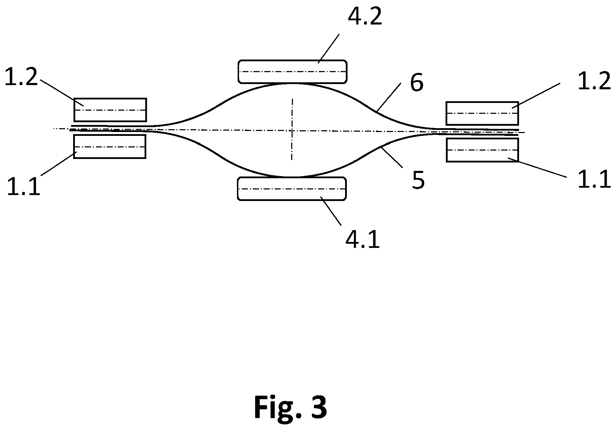

Figur 2 zeigt einen Schnitt im Bereich eines Paares walzenförmiger Elemente 1.1 und 1.2. Dabei wird, wie auch in Figur 3 erkennbar, deutlich, dass ein paar walzenförmiger Elemente 1.1 und 1.2 den Traggurt 5 und den Deckgurt 6 infolge der wirkenden Druckkraft gegeneinander pressen, so dass eine reibschlüssige Verbindung erhalten werden kann, mittels der Drehmomente, die von den walzenförmigen Elementen 1.1 und 1.2 auf Traggurt 5 und Deckgurt 6 übertragen werden können, kann eine Traktionskraftwirkung entsprechend der Drehrichtung der walzenförmigen Elemente 1.1 und 1.2 auf Traggurt 5 und Deckgurt 6 erreicht werden.

In Figur 3 ist außerdem erkennbar, dass in einer Ebene zwei Paare walzenförmiger Elemente 1.1 und 1.2 angeordnet sein können. Jeweils ein Paar ist dabei an einem äußeren Randbereich von Trag- und Deckgurt 5 und 6 angeordnet, so dass sich in diesem Bereich, die nach innen gerichteten Oberflächen von Traggurt 5 und Deckgurt 6 unmittelbar berühren können.

Dazwischen ist ein Bereich vorhanden, in dem kein Paar walzenförmiger Elemente 1.1 und 1.2 angeordnet ist. Dort kann Fördergut (nicht gezeigt) in einem Spalt zwischen Traggurt 5 und Deckgurt 6 platziert worden sein.

Mit dem in Figur 3 gezeigten Schnitt kann man erkennen, dass man in diesem Bereich weitere walzenförmige Elemente 4.1 und 4.2 zwischen walzenförmigen Elementen 1.1 und 1.2 anordnen kann, die ebenfalls ein Paar bilden und die gegenüberliegend angeordnet sind. Sie berühren mit ihrer äußeren Oberfläche einmal den Traggurt 5 an einer äußeren Oberfläche und den Deckgurt 6 an der gegenüberliegenden äußeren Oberfläche.

In nichtdargestellter Form kann an den ebenfalls rechtwinklig zur Förderrichtung drehbar gelagerten weiteren walzenförmigen Elementen 4.1 und 4.2 ebenfalls eine Anpresseinrichtung angreifen, mit der eine Druckkraftbeaufschlagung der weiteren walzenförmigen Elemente 4.1 und 4.2 gegen den jeweiligen Traggurt 5 und den jeweiligen Deckgurt 6 erreicht werden kann. Im einfachsten Fall kann dies eine einfache mechanische Feder sein, die dort angreift und das jeweilige weitere walzenförmige Element 4.1 bzw. 4.2 gegen die nach außen weisende Oberfläche des Traggurtes 5 und Deckgurtes 6 drückt.

## Patentansprüche

1. Deckbandförderer mit jeweils einem als Endlosband ausgebildeten Traggurt (5) und einem Deckgurt (6), die um jeweils eine Umlenktrommel (7) und (8) sowie jeweils eine drehbare Antriebstrommel (9) und (10) so geführt sind, dass sie in einem steilen oder senkrechten Förderbereich gegenüberliegend zueinander so geführt sind, dass ein Fördergut zwischen Traggurt (5) und Deckgurt (6) mit einer translatorischen Bewegung von Traggurt (5) und Deckgurt (6) in Richtung derjeweiligen Antriebstrommel (9 und 10) förderbar ist, wobei im steilen oder senkrechten Förderbereich (11) walzenförmige Elemente (1.1 und 1.2) paarweise an sich gegenüberliegenden Seiten jeweils an der nach außen weisenden Oberfläche des Traggurts (5) und des Deckgurts (6) druckkraftbeaufschlagt anliegend angeordnet sind, die rechtwinklig zur Förderrichtung drehbar gelagert sind, und wobei an mindestens einem der walzenförmigen Elemente (1.1 und/oder 1.2) eines Paares ein Rotationsantrieb angreift, mit dem Traktionskräfte in Förderrichtung oder in die dazu entgegengesetzte Richtung auf den Traggurt (5) und/oder Deckgurt (6) übertragbar sind,
**dadurch gekennzeichnet, dass**
jeweils eine Sensoreinrichtung (3.1, 3.2) an den jeweiligen walzenförmigen Elementen (1.1 und 1.2) vorhanden ist und
eine elektronische Regeleinrichtung vorhanden und ausgebildet ist, die Drehzahl und das Drehmoment, das mit angetriebenen walzenförmigen Elementen (1.1 und/oder 1.2) auf Traggurt (5) und/oder Deckgurt (6) übertragbar ist, in Abhängigkeit mindestens einer der mit den Sensoreinrichtungen (3.1, 3.2) erfassten Messgrößen und der Antriebsleistung sowie der Drehzahl der Antriebstrommel (9) mit der der Traggurt (5) angetrieben ist, zu regeln.

2. Deckbandförderer nach Anspruch 1, **dadurch gekennzeichnet, dass** jeweils ein Paar walzenförmiger Elemente (1.1 und 1.2) an einem nach außen weisenden seitlichen Rand von Traggurt (5) und Deckgurt (6) in einer gemeinsamen Ebene rechtwinklig zur Förderrichtung angeordnet sind.

3. Deckbandförderer nach einem der vorhergehenden Ansprüche,
**dadurch gekennzeichnet, dass** an den walzenförmigen Elementen (1.1 und 1.2) jeweils eine Anpresseinrichtung (2.1, 2.2) angreift, die zur Ausübung von Druckkräften auf die jeweils äußere Oberfläche von Traggurt (5) und Deckgurt (6) ausgebildet ist.

4. Deckbandförderer nach dem vorhergehenden Anspruch, **dadurch gekennzeichnet, dass** die Anpresseinrichtungen (2.1, 2.2) pneumatisch oder hydraulisch betrieben sind.

5. Deckbandförderer nach einem der Ansprüche 3 oder 4, **dadurch gekennzeichnet, dass** eine Sensoreinrichtung (3.1, 3.2) an der jeweiligen Anpresseinrichtung (2) vorhanden ist.

6. Deckbandförderer nach dem vorhergehenden Anspruch, **dadurch gekennzeichnet, dass** die elektronische Regeleinrichtung ferner ausgebildet ist, die auf die jeweilige Oberfläche des Traggurtes (5) oder Deckgurtes (6) wirkende Druckkraft der einzelnen walzenförmigen Elemente (1.1 oder 1.2) in Abhängigkeit mindestens einer der mit der Sensoreinrichtung (3.1, 3.2) erfassten Messgrößen ganzheitlich oder abschnittsweise zu regeln.

7. Deckbandförderer nach einem der vorhergehenden Ansprüche,
**dadurch gekennzeichnet, dass** zwischen zwei Paaren, die jeweils in einer gemeinsamen Ebene angeordnet sind, jeweils mindestens ein Paar weiterer walzenförmiger Elemente (4. 1 und 4.2) vorhanden ist, wobei die weiteren walzenförmigen Elemente (4.1, 4.2) rechtwinklig zur Förderrichtung drehbar gelagert und so angeordnet sind, dass ein walzenförmiges Element (4.1) druckkraftbeaufschlagt mit der Oberfläche des Traggurtes (5) und das jeweils andere walzenförmige Element (4.2) dieses Paares mit der Oberfläche des Deckgurtes (6) in berührendem Kontakt steht.

## Claims

1. A cover belt conveyor with, in each case, a support belt (5) configured as a continuous belt and a cover belt (6), which are each guided around a deflection drum (7) and (8) and a respective rotatable drive drum (9) and (10), such that they are guided opposite one another in a steep or vertical conveying region, and such that a material to be conveyed is conveyable between the support belt (5) and the cover belt (6) with a translational movement of the support belt (5) and the cover belt (6) in the direction of the respective drive drum (9 and 10),
wherein
in the steep or vertical conveying region (11), roller-shaped elements (1.1 and 1.2) are arranged in pairs on opposite sides, in each case on the outwardly facing surface of the support belt (5) and the cover belt (6), which are arranged with contact, in a manner loaded by compressive force, so as to be rotatable at right angles to the conveying direction, and wherein a rotary drive acts on at least one of the roller-shaped elements (1.1 and/or 1.2) of a pair, by means of which rotary drive traction forces are transmittable to the support belt (5) and/or cover belt (6) in the conveying direction or in the opposite direction to the conveying direction,
**characterized in that**
a sensor device (3.1, 3.2) is provided on each of the respective roller-shaped elements (1.1 and 1.2) and
an electronic control device is provided and configured to control the rotational speed and torque that is transmittable via driven roller-shaped elements (1.1 and/or 1.2) to the support belt (5) and/or cover belt (6) in dependence on at least one of the measured variables detected by the sensor devices (3.1, 3.2) and the drive power and the rotational speed of the drive drum (9) with which the support belt (5) is driven.

2. The cover belt conveyor according to claim 1, **characterized in that** a pair of roller-shaped elements (1.1 and 1.2) are arranged in each case on an outwardly facing side edge of the support belt (5) and cover belt (6) in a common plane at right angles to the conveying direction.

3. The cover belt conveyor according to any one of the preceding claims, **characterized in that** a pressing device (2.1, 2.2) acts on each of the roller-shaped elements (1.1 and 1.2) and is configured to exert compressive forces on the outer surface of each of the support belt (5) and cover belt (6).

4. The cover belt conveyor according to the preceding claim, **characterized in that** the pressing devices (2.1, 2.2) are pneumatically or hydraulically operated.

5. The cover belt conveyor according to any one of claims 3 or 4, **characterized in that** a sensor device (3.1, 3.2) is provided on the respective pressing device (2).

6. The cover belt conveyor according to the preceding claim, **characterized in that** the electronic control device is further configured to control the compressive force of the individual roller-shaped elements (1.1 or 1.2) acting on the respective surface of the support belt (5) or cover belt (6) in dependence on at least one of the measured variables detected by the sensor device (3.1, 3.2), wholly or in part.

7. The cover belt conveyor according to any one of the preceding claims, **characterized in that** between two pairs, each of which is arranged in a common plane, there is, in each case, at least one pair of further roller-shaped elements (4.1 and 4.2), wherein the further roller-shaped elements (4.1, 4.2) are mounted so as to be rotatable at right angles to the conveying direction and are arranged such that one roller-shaped element (4.1) is in contact, in a manner loaded by compressive force, with the surface of the support belt (5) and the other roller-shaped element (4.2) of this pair is in touching contact with the surface of the cover belt (6).

## Revendications

1. Convoyeur à bande de couverture, comprenant respectivement une bande de support (5), conçue comme une bande sans fin, et une bande de couverture (6) qui sont guidées autour de respectivement un tambour de renvoi (7) et (8) et de respectivement un tambour d'entraînement rotatif (9) et (10) de sorte qu'elles sont guidées en vis-à-vis dans une région de convoyage raide ou verticale, de sorte qu'un matériau à convoyer peut être convoyé entre la bande de support (5) et la bande de couverture (6) avec un mouvement de translation de la bande de support (5) et de la bande de couverture (6) en direction du tambour d'entraînement (9 et 10) respectif, dans lequel
des éléments (1.1 et 1.2) en forme de rouleau, qui sont montés de manière à pouvoir tourner perpendiculairement à la direction de convoyage, sont agencés dans la région de convoyage raide ou verticale (11) les uns à côté des autres par paires au niveau de côtés se faisant face et en étant soumis à une pression respectivement au niveau de la surface tournée vers l'extérieur de la bande de support (5) et de la bande de couverture (6), et dans lequel un entrainement de rotation, grâce auquel des forces de traction peuvent être transférées à la bande de support (5) et/ou à la bande de couverture (6) dans la direction de convoyage ou dans la direction opposée à celle-ci, vient en prise au niveau d'au moins un des éléments en forme de rouleau (1.1 et/ou 1.2) d'une paire,
**caractérisé en ce que**
respectivement un dispositif de capteur (3.1, 3.2) est présent au niveau des éléments en forme de rouleau (1.1 et 1.2) respectifs et
un dispositif de régulation électronique est présent et conçu pour, en fonction d'au moins une des grandeurs de mesure détectées par les dispositifs de capteur (3.1, 3.2) et du couple d'entraînement ainsi que de la vitesse de rotation du tambour d'entraînement (9) grâce auquel la bande de support (5) est entraînée, réguler la vitesse de rotation et le couple qui peut être transmis à la bande de support (5) et/ou à la bande de couverture (6) grâce à des éléments en forme de rouleau (1.1 et/ou 1.2) entraînés.

2. Convoyeur à bande de couverture selon la revendication 1, **caractérisé en ce que** respectivement une paire d'éléments en forme de rouleau (1.1 et 1.2) sont agencés au niveau d'un bord latéral tourné vers l'extérieur de la bande de support (5) et de la bande de couverture (6) dans un plan commun perpendiculairement à la direction de convoyage.

3. Convoyeur à bande de couverture selon l'une quelconque des revendications précédentes, **caractérisé en ce que** respectivement un dispositif de pression (2.1, 2.2) conçu pour exercer des forces de pression sur la surface extérieure respective de la bande de support (5) et de la bande de couverture (6) vient en prise au niveau des éléments en forme de rouleau (1.1 et 1.2).

4. Convoyeur à bande de couverture selon la revendication précédente, **caractérisé en ce que** les dispositifs de pression (2.1, 2.2) sont actionnés de manière pneumatique ou hydraulique.

5. Convoyeur à bande de couverture selon l'une quelconque des revendications 3 ou 4, **caractérisé en ce qu'**un dispositif de capteur (3.1, 3.2) est présent au niveau du dispositif de pression (2) respectif.

6. Convoyeur à bande de couverture selon la revendication précédente, **caractérisé en ce que** le dispositif de régulation électronique est en outre conçu pour, de manière globale ou par sections en fonction d'au moins une des grandeurs de mesure détectées par le dispositif de capteur (3.1, 3.2), réguler la force de pression des différents éléments en forme de rouleau (1.1 ou 1.2) agissant sur la surface respective de la bande de support (5) ou de la bande de couverture (6).

7. Convoyeur à bande de couverture selon l'une quelconque des revendications précédentes, **caractérisé en ce que** respectivement au moins une paire d'éléments en forme de rouleau (4.1 et 4.2) supplémentaire est présente entre deux paires agencées respectivement dans un plan commun, dans lequel les éléments en forme de rouleau (4.1, 4.2) supplémentaires sont montés de manière à pouvoir tourner perpendiculairement à la direction de convoyage et sont agencés de sorte qu'un élément en forme de rouleau (4.1) est en contact touchant avec la surface de la bande de support (5) en étant soumis à une pression et l'autre élément en forme de rouleau (4.2) respectif de ladite paire est en contact touchant avec la surface de la bande de couverture (6).
